# EUROPEAN PATENT APPLICATION

(11) **EP 4 578 287 A1**
(43) Date of publication of application: **02.07.2025**
(21) Application number: 24223542.2
(22) Date of filing: 27.12.2024
(51) Int. Cl.: A01N 25/12, A01N 59/16, A01N 63/38, A01P 21/00

(54) **COMPOSITION FOR IMPROVING PLANT DROUGHT STRESS RESISTANCE COMPRISING TRICHODERMA-MEDIATED IRON OXIDE NANOPARTICLES AND METHOD FOR PRODUCING TRICHODERMA-MEDIATED IRON OXIDE NANOPARTICLES**

(30) Priority: 29.12.2023 KR 20230197339
(71) Applicant: Seoul National University R & DB Foundation, Seoul 08826 (KR); Braintree Biotechnology Institute, Seoul 02011 (KR)
(72) Inventor: KIM, Hyun Seok, SEOUL (KR); FIZA, Liaquat, SEOUL (KR); PARK, Chanoh, 41868 DAEGU (KR); KIM, Seohyun, 08815 SEOUL (KR); AFIA, Alyan, 08800 SEOUL (KR); YUN, Hye Young, 07034 SEOUL (KR)
(74) Representative: AWA Sweden AB

(57) **Abstract**

The present disclosure relates to a composition for improving plant drought stress resistance including *Trichoderma* spp.-mediated iron oxide nanoparticles and a method for producing the *Trichoderma*-mediated iron oxide nanoparticles, and more specifically, to a composition for improving plant drought stress resistance using nanoparticles synthesized by fungi by mixing a cell-free filtrate of *Trichoderma harzianum* biomass and an iron oxide solution, a microbial agent, a method for improving plant drought stress resistance, and a method for producing the nanoparticles.

## Description

### CROSS-REFERENCE TO RELATED APPLICATIONS

This application claims the priority of Korean Patent Application No. 10-2023-0197339 filed on December 29, 2023, in the Korean Intellectual Property Office, the disclosure of which is incorporated herein by reference.

### BACKGROUND

### Field

The present disclosure relates to a composition for improving plant drought stress resistance including *Trichoderma* spp.-mediated iron oxide nanoparticles and a method for producing the *Trichoderma-mediated* iron oxide nanoparticles, and more specifically, to a composition for improving plant drought stress resistance using nanoparticles synthesized by fungi by mixing a cell-free filtrate of *Trichoderma harzianum* biomass and an iron oxide solution, a microbial agent, a method for improving plant drought stress resistance, and a method for producing the nanoparticles.

### Description of the Related Art

Plants face numerous environmental obstacles while growing and developing in both natural and cultivation environments. Drought is the most serious problem that may have a significant impact on plant productivity, among other problems, because 75 to 95% of the weight of plants is composed of water. Therefore, drought is considered as a major environmental stress factor for various plants, and has been considered as a significant threat factor to food security by triggering large-scale famines in the past. As environmental problems continue to worsen, *Abies koreana* becomes increasingly vulnerable to drought stress.

Drought-resistant plants using genetic engineering technology have been developed to prevent crop damage caused by drought, but in the case of crops used as food, there is a strong consumer aversion to genetically engineered plants, so that the development of technology to induce drought resistance in plants without genetic engineering is required.

Meanwhile, nanomaterials have received great attention in the forestry field and had a significant effect on plants under drought stress. According to Non-patent Document 1, plants have been reported to respond positively to nanoparticles (NPs) such as Mn, Fe, Zn, Cu, Ag, Au, Se, and TiO₂ under drought conditions. Since NPs are small in size (1 to 100 nm) and may be rapidly utilized for plant growth in agriculture in remarkably small amounts, the NPs are considered as an alternative to excessive plant fertilizers and plant growth regulators. Under drought conditions, NP application reduces the harmful effects on plants, and among various types of nanoparticles, iron oxide (FeO) is a trace element beneficial to plants and contributes to various important metabolic reactions of plants. The main pathways of NP introduction are foliar spraying and root fertilization on the aerial parts of plants, and the application of NPs affects plant growth and yield by expressing genes that resist to drought stress.

According to Non-patent Document 2, FeO-NP was found to promote normal stomatal opening, chlorophyll content, plasma membrane, ATPase activation, and drought tolerance, and in Non-patent Document 3, it was found through extensive research that the application of FeO-NP significantly promotes plant growth and improves crop yield.

According to Non-patent Document 4, it was reported that *Trichoderma harzianum* affects plant growth and antioxidant enzyme systems, thereby improving the salt tolerance of rice. However, the effect of a combination of *Trichoderma* spp. and metal nanoparticles on drought stress in plants is unknown.

Under the background, the present inventors synthesized *Trichoderma-mediated* iron oxide nanoparticles through fungal synthesis using *Trichoderma harzianum* and an iron oxide (Fe₂O₃) solution, and confirmed an effect of improving plant drought stress resistance, and then completed the present disclosure.

### [Prior Arts]

### [Non-patent Documents]

(Non-patent Document 1) Rizwan M, Ali S, Ali B, Adrees M, Arshad M, Hussain A, ur Rehman MZ, Waris AA (2019) Zinc and iron oxide nanoparticles improved the plant growth and reduced the oxidative stress and cadmium concentration in wheat. Chemosphere 214:269-277
(Non-patent Document 2) Sutuliene, R., Brazaityte, A., Malek, S., Jasik, M., & Samuoliene, G. (2023). Response of oxidative stress and antioxidant system in pea plants exposed to drought and boron nanoparticles. Antioxidants, 12(2), 528.
(Non-patent Document 3) Sonawane H, Shelke D, Chambhare M, Dixit N, Math S, Sen S, Borah SN, Islam NF, Joshi SJ, Yousaf B, Rinklebe J, Sarma H. (2022). Fungi-derived agriculturally important nanoparticles and their application in crop stress management-Prospects and environmental risks. Environmental Research, 212, 113543.
(Non-patent Document 4) Shukla, N., Awasthi, R. P., Rawat, L., & Kumar, J. (2012). Biochemical and physiological responses of rice (Oryza sativa L.) as influenced by Trichoderma harzianum under drought stress. Plant Physiology and Biochemistry, 54, 78-88.

### SUMMARY

An object of the present disclosure is to provide a composition and a microbial agent for improving plant drought resistance including *Trichoderma* spp.-mediated iron oxide nanoparticles.

Another object of the present disclosure is to provide a method for improving plant drought resistance using the aforementioned composition or microbial agent.

Yet another object of the present disclosure is to provide a method for producing the aforementioned *Trichoderma* spp.-mediated iron oxide nanoparticles.

In order to solve the above-described object, the present disclosure provides a composition for improving plant drought stress resistance including *Trichoderma* spp.-mediated iron oxide nanoparticles.

In the present disclosure, the *Trichoderma* may be *Trichoderma harzianum* (Accession No. KCTC 16216BP).

In the present disclosure, the *Trichoderma* spp.-mediated iron oxide nanoparticles may be produced by performing the following steps (a) to (f):
(a) obtaining biomass after washing *Trichoderma;*
(b) suspending and culturing the biomass in distilled water;
(c) obtaining a cell-free filtrate by filtering after sonication;
(d) obtaining a precipitate by mixing the cell-free filtrate and an iron oxide solution;
(e) obtaining nanoparticles by washing and drying the precipitate; and
(f) pulverizing and heating the nanoparticles.

In the present disclosure, the cell-free filtrate and the iron oxide solution in step (d) may be mixed in a volume ratio of 1 to 20: 1.

In the present disclosure, the plant may be conifers or dicotyledonous plants.

In the present disclosure, the conifers may be *Abies koreana,* yews, pines, metasequoia, firs, Cedrus deodara, Thuja orientalis or Abies nephrolepis, and the dicotyledonous plants may be arabesque, cucumber, tomato, soybean, mung bean, red bean, radish, cabbage, lettuce, quince, plantain, carrot, clover, peach tree, apple tree, persimmon tree, potato, or sweet potato.

In addition, the present disclosure provides a microbial agent including the composition described above.

Further, the present disclosure provides a method for improving plant drought stress resistance, including treating a plant or soil with the composition or microbial agent described above.

In the present disclosure, the treating step may be performed by one or more methods selected from the group consisting of soil drenching, soil irrigation, foliar spraying, trunk injection, foliage treatment, rhizosphere process, and seed treatment.

Furthermore, the present disclosure provides a method for producing *Trichoderma*-mediated iron oxide nanoparticles, including the following steps (a) to (f):
(a) obtaining biomass after washing *Trichoderma;*
(b) suspending and culturing the biomass in distilled water;
(c) obtaining a cell-free filtrate by filtering after sonication;
(d) obtaining a precipitate by mixing the cell-free filtrate and an iron oxide solution;
(e) obtaining nanoparticles by collecting and drying pellets after centrifugation; and
(f) pulverizing and heating the nanoparticles.

In the present disclosure, the culturing in step (b) may be performed by shake-culturing at 30 to 50°C for 5 to 15 days.

In the present disclosure, the cell-free filtrate and the iron oxide solution in step (d) may be mixed in a volume ratio of 1 to 20: 1.

In the present disclosure, the heating in step (f) may be performed at 400 to 600°C for 1 to 3 hours.

According to the present disclosure, the *Trichoderma harzianum-*mediated iron oxide nanoparticles are effective in sustaining and promoting plant growth even in an environment lacking water by inducing drought stress resistance in plants, and can replace conventional chemical fertilizers due to their eco-friendly characteristics.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF THE DRAWINGS

The above and other aspects, features and other advantages of the present disclosure will be more clearly understood from the following detailed description taken in conjunction with the accompanying drawings, in which:

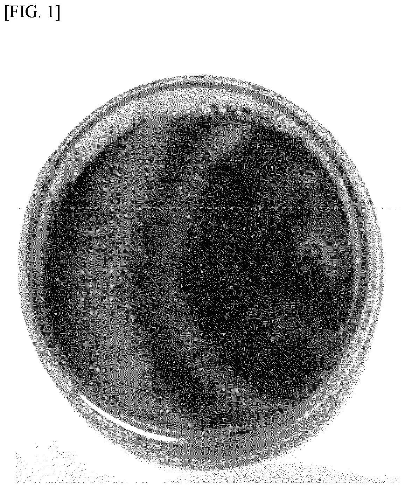

FIG. 1 is a photograph showing results of the separation, culture, and identification of *Trichoderma* species;
FIG. 2 shows confirming the potential of *Trichoderma* for drought resistance. FIGS. 2A, 2B, and 2C show indole-3-acetic acid (IAA, auxin) production ability, phosphate solubilization assay result, and hydrogen cyanide (HCN) production ability in sequence, and FIG. 2D shows the IAA production ability, phosphate solubilization assay result, and HCN production ability in a comprehensive manner, and FIG. 2E shows a PEG test result;
FIG. 3 shows a BLAST result for an ITS base sequence of a *Br10* strain;
FIG. 4 shows a fungal synthesis process of *Trichoderma-mediated* iron oxide (Fe₂O₃) nanoparticles;
FIG. 5 shows a FTIR spectrum of *Trichoderma-mediated* iron oxide nanoparticles;
FIG. 6 shows an XRD spectrum of *Trichoderma-mediated* iron oxide nanoparticles;
FIG. 7 shows Fe-SEM and EDS characterization results of *Trichoderma-mediated* iron oxide nanoparticles;
FIG. 8 shows elemental mapping results of *Trichoderma-mediated* iron oxide nanoparticles;
FIG. 9 shows an application process of *Trichoderma-mediated* iron oxide nanoparticles to *Abies koreana* seedlings;
FIG. 10 shows results of confirming effects of *Trichoderma-mediated* iron oxide nanoparticles on *Abies koreana* through plant phenotypes according to a degree of drought stress [CK: control group, T1: *Trichoderma-mediated* nanoparticle inoculation group (FMN), T2: moderate drought stress (MD), T3: group inoculated with *Trichoderma-mediated* iron oxide nanoparticles under moderate drought stress conditions (FMN + MD), T4: severe drought stress (SD), T5: group inoculated with *Trichoderma-mediated* iron oxide nanoparticles under severe drought stress conditions (FMN + SD)];
FIG. 11 shows a result of confirming effects of *Trichoderma-mediated* iron oxide (Fe₂O₃) nanoparticles on *Abies koreana* according to a degree of drought stress using photosynthetic rate (Amax), stomatal conductance (Gs), transpiration rate (E), water uptake efficiency (WUE), shoot length, root length, and intercellular CO₂ as parameters; and
FIG. 12 shows the principal component analysis and contribution of variables for groups C, FMN, MD, MD+FMN, SD, and SD+FMN, respectively.

### DETAILED DESCRIPTION OF THE EMBODIMENT

Hereinafter, the present disclosure will be described in more detail.

As described above, genetic engineering technology, nanoparticle technology, and the like are applied to improve the drought stress resistance of plants, but there is no known technology for applying *Trichoderma-mediated* iron oxide nanoparticles synthesized by fungi using a *Trichoderma* and iron oxide solution.

Accordingly, the present inventors have found that *Trichoderma-mediated* iron oxide nanoparticles promote plant growth under drought stress conditions and induce drought stress resistance by increasing photosynthetic rate (Amax), stomatal conductance (Gs), transpiration rate (E), and water use efficiency (WUE), and have sought a solution to the above-described problem by providing a technology for improving plant drought stress resistance using the same.

Therefore, a first aspect of the present disclosure relates to a composition for improving plant drought stress resistance including *Trichoderma* spp.-mediated iron oxide nanoparticles and a microbial agent including the same.

In relation to the first aspect, the present disclosure provides a composition including *Trichoderma* spp.-mediated iron oxide nanoparticles for improving plant drought stress resistance.

In addition, in relation to the first aspect, the present disclosure provides a microbial agent including *Trichoderma* spp.-mediated iron oxide nanoparticles for improving plant drought stress resistance.

As used herein, the term `drought stress' means a condition in which normal water supply necessary for plant growth is not provided, and includes abiotic conditions (e.g., exposure to dry conditions, exposure to water shortage conditions) that cause damage to plant growth and survival.

As used herein, the term 'resistance' means a property of a plant to withstand environmental stress such as drought, and is used with the same meaning as 'tolerance'.

In the present disclosure, the *Trichoderma* included in the composition may be *Trichoderma harzianum.*

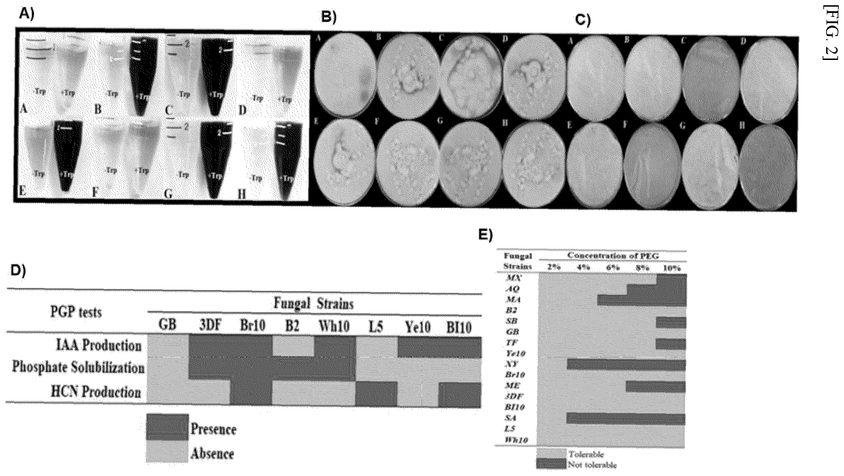

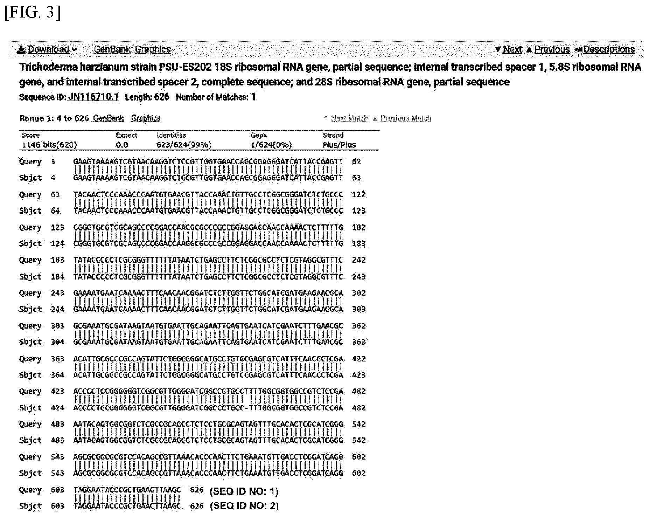

In a specific embodiment of the present disclosure, in order to confirm the potential of various strains isolated from the roots of *Abies koreana,* the isolated strains were each grown in PEG, and then indole-3-acetic acid (IAA), hydrogen cyanide (HCN), and phosphate solubilization analyses were performed. As a result, as shown in FIG. 2, eight types of fungi showed the ability to withstand maximum PEG, and among eight types of fungi, a *Br10* strain, which had all of the IAA production ability, HCN production ability, and phosphate solubilization ability, was selected. The *Br10* strain was identified as *Trichoderma harzianum* as shown in FIG. 3, and was deposited at the Korean Collection for Type Cultures (KCTC) on December 27, 2024, and was assigned the accession number KCTC 16216BP(KCTC 19118P).

Therefore, *Trichoderma harzianum,* which is used for fungal synthesis of the *Trichoderma*-mediated iron oxide nanoparticles of the present disclosure, has all IAA production ability, phosphate solubilization ability, and HCN production ability, and thus may effectively promote plant growth under drought stress conditions.

In the present disclosure, the *Trichoderma-mediated* iron oxide nanoparticles may be prepared by performing the following steps (a) to (f):
(a) obtaining biomass after washing *Trichoderma;*
(b) suspending and culturing the biomass in distilled water;
(c) obtaining a cell-free filtrate by filtering after sonication;
(d) obtaining a precipitate by mixing the cell-free filtrate and an iron oxide solution;
(e) obtaining nanoparticles by washing and drying the precipitate; and
(f) pulverizing and heating the nanoparticles.

At this time, the cell-free filtrate and the iron oxide solution in step (d) may be mixed in a volume ratio of 1 to 20: 1.

The description of the method for producing the *Trichoderma-mediated* iron oxide nanoparticles of the present disclosure refers to the following description.

In the present disclosure, the plant may be conifers or dicotyledonous plants, but is not limited thereto. For example, the conifers may be *Abies koreana,* yews, pines, metasequoia, firs, Cedrus deodara, Thuja orientalis or Abies nephrolepis, and the dicotyledonous plants may be arabesque, cucumber, tomato, soybean, mung bean, red bean, radish, cabbage, lettuce, quince, plantain, carrot, clover, peach tree, apple tree, persimmon tree, potato, or sweet potato, but are not limited thereto.

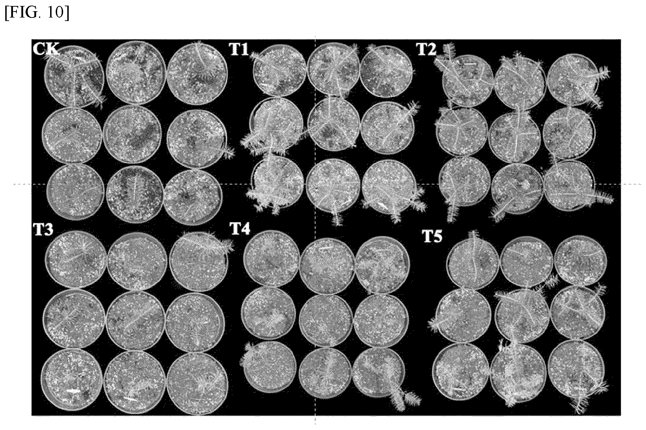

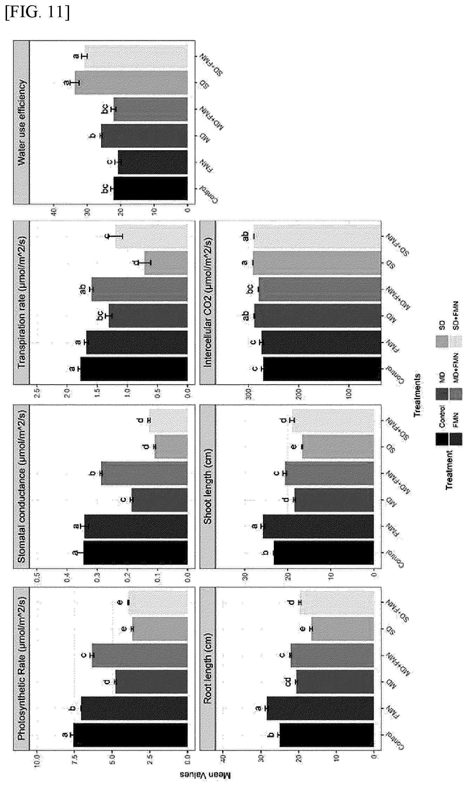

In a specific embodiment of the present disclosure, the *Trichoderma-mediated* iron oxide nanoparticles synthesized by fungi according to the producing method were inoculated into *Abies koreana* seedlings under conditions of no drought stress, moderate drought stress, or severe drought stress to evaluate the effect of inducing drought stress resistance. As a result, as shown in FIG. 10, it was confirmed that the groups inoculated with *Trichoderma-*mediated iron oxide nanoparticles promoted the growth of *Abies koreana* compared to the non-inoculated groups. In addition, as shown in FIG. 11, it was confirmed that the groups inoculated with *Trichoderma-mediated* iron oxide nanoparticles had increased shoot length and root length compared to the non-inoculated groups to have a positive effect on plant growth.

Furthermore, as shown in FIG. 11, it was confirmed that the groups inoculated with *Trichoderma-mediated* iron oxide nanoparticles showed increased photosynthetic rate (Amax), stomatal conductance (Gs), transpiration rate (E), and water use efficiency (WUE) compared to the non-inoculated groups to induce resistance to drought stress by *Trichoderma*-mediated iron oxide nanoparticles.

Therefore, the composition including the *Trichoderma*-mediated iron oxide nanoparticles according to the present disclosure may effectively increase the growth rate of plants, and increase photosynthetic rate (Amax), stomatal conductance (Gs), transpiration rate (E), and water use efficiency (WUE), compared to cases where drought stress resistance is not induced.

The composition for improving plant drought stress resistance according to the present disclosure may be formulated in various forms and used as a microbial agent. Specifically, the composition may be prepared in the form of dry powder or liquid fertilizer, but is not limited thereto. For example, the formulated form may be a liquid, a granule, a powder, an emulsion, an oil agent, a wettable powder, a coating agent, etc., and at this time, may be prepared by adding a solvent or a carrier. Preferably, the composition may be formulated as a biological fertilizer for promoting the survival or growth of plants to replace chemical fertilizers. That is, the microbial agent of the present disclosure may be formulated as a biofertilizer to overcome the limited supply of chemical fertilizers in eco-friendly organic farming.

As used herein, the term "microbial agent" refers to a product made of fungi, bacteria, viruses, etc. that are effective for controlling plant pathogens, pests, or weeds, and has the advantages of low toxicity to humans and animals and low impact on the ecosystem.

As used herein, the term "biofertilizer" refers to a product that is added with organic materials, minerals, or a mixture thereof using useful microorganisms to be expected to have effects on crop production or soil fertility maintenance.

In the present disclosure, the composition and the microbial agent may further include any other components used in the art to reduce drought stress or promote growth of plants, if necessary. For example, the composition and the microbial agent may further include at least one selected from the group consisting of a plant growth regulator, a plant growth stimulant, and a plant nutrient, but is not limited thereto.

The plant growth regulator, the plant growth stimulant, or the plant nutrient may be a chemical substance or another strain of bacteria, and may be an herbicide, a fungicide, an insecticide, a fertilizer, or any combination thereof.

The plant growth regulator may include beneficial microbial activators, organic fertilizers, and chemical fertilizers.

The microbial activator may include enzyme precursors, microbial metabolites, organic acids, carbohydrates, enzymes, and/or trace elements. For example, the microbial activator may include processed enzyme products such as yeast autolysates, humus materials (organic matter other than organisms found on the surface and in the soil), seaweed extracts, starches, amino acids, and trace elements such as zinc, iron, copper, manganese, bromine, and molybdenum. However, the trace elements are not limited thereto.

The chemical fertilizer may include various chemicals that may provide nitrogen, phosphorus, and potassium nutrients to support plant growth. For example, the chemical fertilizer may include urea, calcium phosphate, potassium phosphate, and mixed nitrogen-phosphate-potassium (N-P-K) fertilizers. The chemical fertilizer may also include other materials known in the art.

In addition, the composition and the microbial agent of the present disclosure may further include additives, bulking agents, nutrients and/or disintegrants.

In the present disclosure, the additive may be at least one selected from the group consisting of polycarboxylate, sodium lignosulfonate, calcium lignosulfonate, sodium dialkylsulfosuccinate, sodium alkyl aryl sulfonate, polyoxyethylene alkyl phenyl ether, sodium tripolyphosphate, polyoxyethylene alkyl aryl phosphoric ester, polyoxyethylene alkyl aryl ether, polyoxyethylene alkyl aryl polymer, polyoxyalkylone alkyl phenyl ether, polyoxyethylene nonyl phenyl ether, sodium sulfonate naphthalene formaldehyde, Triton 100 and Tween 80, but is not limited thereto.

In the present disclosure, the bulking agent and the nutrient may be at least one selected from the group consisting of skim milk (medium), soybean powder, rice, wheat, yellow clay, diatomaceous earth, bentonite, dextrin, glucose, and starch, but is not limited thereto.

In the present disclosure, the disintegrant may be at least one selected from the group consisting of bentonite, talc, dialite, kaolin, and calcium carbonate, but is not limited thereto.

In the present disclosure, the usage amount of the composition or microbial agent may be appropriately determined according to its formulation, damage situation, application method, application location, etc.

A second aspect of the present disclosure relates to a method for improving plant drought stress resistance using the composition for improving plant drought stress resistance and the microbial agent containing the composition described above.

Specifically, the method for improving plant drought stress resistance according to the present disclosure may include treating a plant or soil with the composition for improving plant drought stress resistance or the microbial agent containing the composition described above.

In the present disclosure, the treating step may be performed by at least one method selected from the group consisting of spraying (for example, spraying, misting, atomizing, powder spraying, granule spraying, surface application, constant application, etc.), soil irrigation (for example, mixing, irrigation, etc.), surface application (for example, applying, spreading, covering, etc.), immersion, poisoning, fumigation, and seed treatment, but is not limited thereto.

A third aspect of the present disclosure relates to a method for producing *Trichoderma*-mediated iron oxide nanoparticles.

Specifically, the method for producing *Trichoderma-mediated* iron oxide nanoparticles of the present disclosure may include the following steps (a) to (f):
(a) obtaining biomass after washing *Trichoderma;*
(b) suspending and culturing the biomass in distilled water;
(c) obtaining a cell-free filtrate by filtering after sonication;
(d) obtaining a precipitate by mixing the cell-free filtrate and an iron oxide solution;
(e) obtaining nanoparticles by collecting and drying pellets after centrifugation; and
(f) pulverizing and heating the nanoparticles.

In the present disclosure, step (a) is a step of obtaining the *Trichoderma* biomass, and the biomass may include a *Trichoderma* strain itself and/or *Trichoderma* cells.

In step (a), it is preferable that the *Trichoderma* biomass is in a state where the medium particles are removed. For example, the *Trichoderma* strain spores are cultured to obtain the strain, and then the strain is filtered and washed with distilled water at least once, but is not limited thereto. The culture conditions may be shake-culturing at 20°C to 33°C for 5 to 10 days but are not limited thereto. The washed *Trichoderma* strain is affected by stress conditions and releases metabolites in water.

In the present disclosure, step (b) is a step of suspending and culturing the biomass in distilled water, and for example, shake-culturing at 35°C to 50°C for 5 to 15 days, but is not limited thereto.

In the present disclosure, step (c) is a step of obtaining a cell-free filtrate by filtering after sonication, and the biomass obtained after the culturing in step (b) is sonicated to break the cell walls and release metabolites. At this time, the sonication conditions may be applied without limitation as long as the cell walls may be sufficiently broken. For example, the sonication may be performed at room temperature for 10 to 60 minutes, but is not limited thereto. Through step (c), the metabolites released from the *Trichoderma* strain may be extracted to obtain a *Trichoderma* strain extract.

In step (c), the sonicated biomass may be filtered to remove cells. The pH of the cell-free filtrate obtained after filtration may be 6.0 to 7.0, preferably 6.2 to 6.8.

In the present disclosure, step (d) is a step of obtaining a precipitate by mixing the cell-free filtrate and the iron oxide solution. At this time, the cell-free filtrate and the iron oxide solution may be mixed in a volume ratio of 1 to 20: 1, preferably 1 to 10: 1.

In step (d), the stirring may be performed for a predetermined period of time for uniform mixing of the cell-free filtrate and the iron oxide solution and the generation of the precipitate. For example, the stirring may be performed for 18 to 48 hours, but is not limited thereto, and it is preferable to perform stirring until the precipitate is generated in the mixture and visually confirmed.

In the present disclosure, step (e) is a step of obtaining nanoparticles by collecting and drying pellets after centrifugation, and the centrifugation may be performed under appropriate conditions that may collect a sufficient amount of pellets.

In step (d), the drying conditions may be applied without limitation as long as the drying is performed to a state suitable for pulverization, and for example, the drying may be performed at 30°C to 50°C for 18 to 30 hours, but is not limited thereto.

In the present disclosure, step (f) is a step of pulverizing and heating the nanoparticles, and the pulverizing method may be applied with various known methods, and may be performed by pulverizing using forceps or the like without using a pulverizer. After pulverizing, the nanoparticles may be heated at a high temperature to finally obtain *Trichoderma*-mediated iron oxide nanoparticles. The heating may be performed at 400°C to 600°C for 1 to 4 hours, but is not limited thereto.

The average particle size of the *Trichoderma-mediated* iron oxide nanoparticles produced by the producing method of the present disclosure may be 8 to 12 nm.

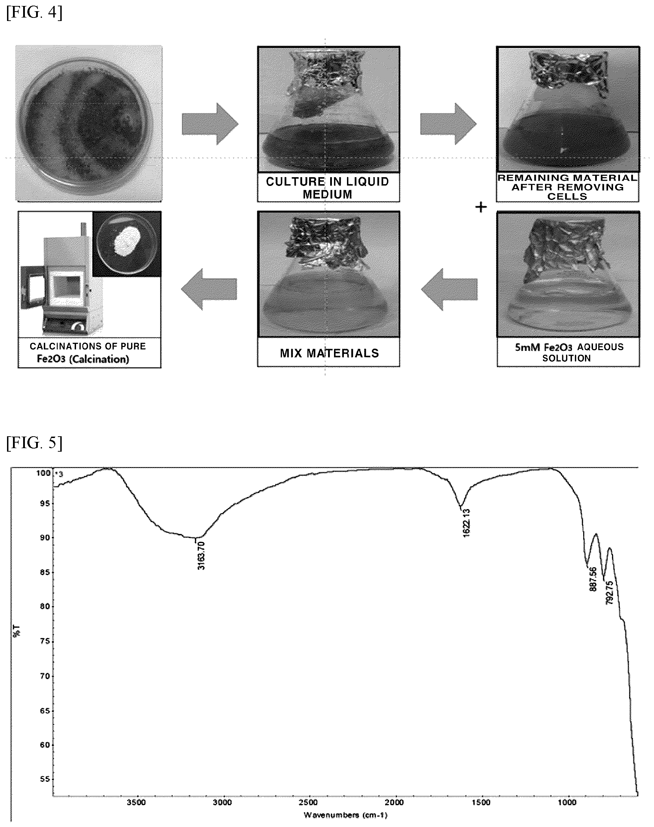

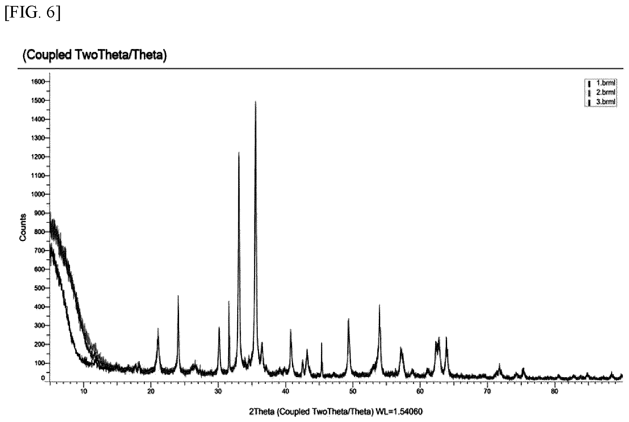

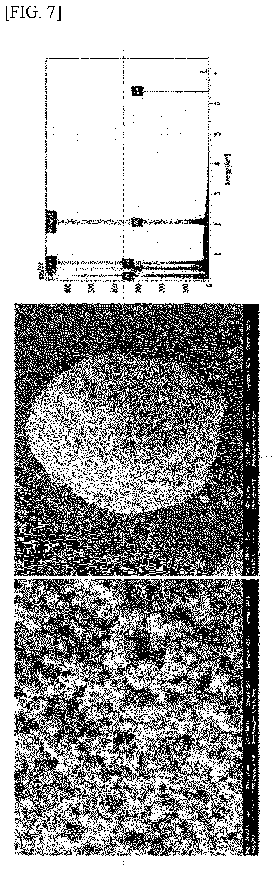

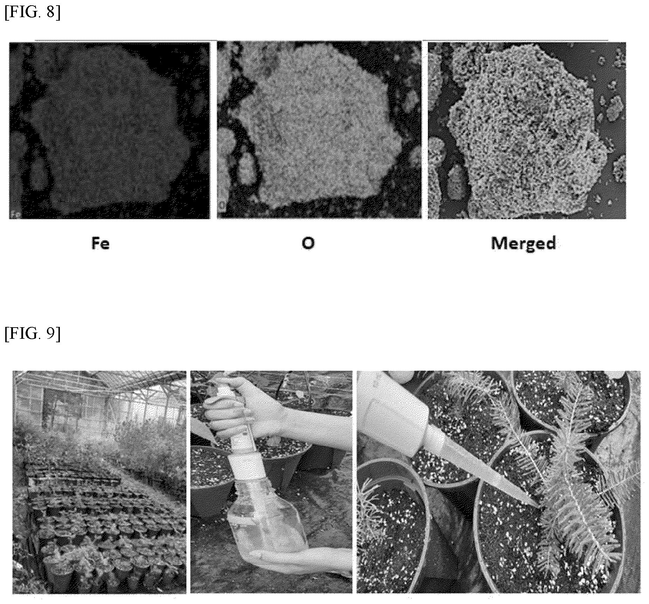

In a specific embodiment of the present disclosure, FTIR spectroscopy, XRD analysis, Fe-SEM, EDS, and elemental mapping were performed to analyze the characteristics of the produced *Trichoderma-mediated* iron oxide nanoparticles. The FTIR spectrum of FIG. 5 supports that the *Trichoderma-mediated* iron oxide nanoparticles were successfully produced, and the XRD spectrum of FIG. 6 shows that the purity of the *Trichoderma* nanoparticles is high. The Fe-SEM image of FIG. 7 shows that the nanoparticles are uniformly distributed without agglomeration, and the average particle size is 10 nm. The EDS mapping result of FIG. 8 proves that the nanoparticles contain iron and oxygen as main components, and that the iron oxide nanoparticles have high purity.

Hereinafter, the present disclosure will be described in more detail with reference to Examples. However, the present disclosure may make various modifications and may have various forms, and specific Examples and descriptions described below are only intended to help understand the present disclosure, and are not intended to limit the present disclosure to a specific disclosed form. It should be understood that the scope of the present disclosure includes all modifications, equivalents, or substitutes included in the spirit and technical scope of the present disclosure.

### [Example 1]

### Isolation, culture, and identification of Trichoderma species

In order to identify various fungi, root samples of *A. koreana* were collected from Jirisan. The collected samples were immersed in 1% sodium hypochlorite, rinsed with distilled water, and dried on sterile filter paper. Four pieces of roots having the size of 2 to 3 mm were placed on a 2.5% potato dextrose agar (PDA) medium supplemented with rifampicin and ampicillin and stored at room temperature in a laboratory for 7 to 10 days. Individual plates were subcultured with other fungal strains and the growth was recorded daily.

### [Example 2]

### Identification of potential of isolated strains

To identify the drought tolerance of strains, all the strains were grown in various concentrations of PEG. After culturing the strains for 5 to 7 days in a PDA medium supplemented with 10% PEG, the diameter growth of each strain was measured, and as shown in FIG. 2, it was confirmed that eight types of fungi had the ability to withstand the maximum concentration of PEG. These eight types of fungi were selected to confirm IAA production ability, phosphate solubilization analysis, and HCN production ability.

First, to measure the IAA production ability of the strains, the strains were cultured at 25 to 27°C for 5 to 7 days at a speed of 130 rpm using a shaking incubator, centrifuged at 4000 rpm for 15 minutes at 4°C, and then 2 ml of the supernatant was collected, and 1 ml of a Salkowski reagent (0.5 M FeCl₃ + 35% perchloric acid) was added. After blocking the light and reacting for 30 minutes, it was confirmed that the color was changed to red in the IAA-synthesizing strain.

Next, a phosphate solubilization experiment for the strains was conducted to measure the ability to convert phosphate, a nutrient that may be used in plants, and the strains were cultured in a Pikovskaya agar medium (yeast extract 0.50 g; dextrose 10 g; calcium phosphate 5 g; ammonium sulfate 0.50 g; potassium chloride 0.20 g; magnesium sulfate 0.10 g; manganese sulfate 0.0001 g; iron sulfate 0.0001 g; NaCl 0.2 g; and agar 15 g). The strains were cultured at 25 to 27°C for 1 week, and it was confirmed that halozones were formed around the strains in the case of strains with phosphate solubilization ability.

Finally, to evaluate the hydrogen cyanide (HCN) production ability, a PDA medium supplemented with 4.4 g L⁻¹ glycine was used, and filter paper containing diluted picric acid (0.5%) and sodium carbonate (2%) was placed on the cover of each petri dish. The petri dish was sealed with a parafilm to avoid gas release, and after culturing for 2 to 3 days at 28°C, the color of the filter paper changed from yellow to light brown depending on a HCN concentration.

As shown in FIG. 2, among the eight types of fungi, *Br10,* which had IAA production ability, phosphate solubilization ability, and HCN production ability, was identified as the most likely strain for fungal-mediated nanoparticle synthesis.

The *Br10* strain was identified through macroscopic, microscopic, and molecular analyses. After isolating the fungal DNA, an internal transcribed spacer (ITS) was amplified by PCR using ITS1F/ITS4R primers, and the amplified product was subjected to Sanger sequencing and then subjected to BLASTN search to determine homology.

As a result, as confirmed in FIG. 3, the ITS base sequence of the *Br10* strain(SEQ ID NO: 1) was confirmed to be 99% (623bp/624bp) identical to GenBank: JN116710.1(SEQ ID NO: 2), and the *Br10* strain was identified as *Trichoderma harzianum,* which was deposited at the Korean Collection for Type Cultures (KCTC) on December 27, 2024 and assigned the accession number KCTC 16216BP.

The GenBank: JN116710.1 was *"Trichoderma harzianum* PSU-ES202 18S ribosomal RNA gene, partial sequence; internal transcribed spacer 1, 5.8S ribosomal RNA gene and internal transcribed spacer 2, complete sequences; and 28S ribosomal RNA gene, partial sequence". The *Trichoderma harzianum* PSU-ES202 was reported as *Hypocrea lixii* in the literature [Supaphon, P., Phongpaichit, S., Rukachaisirikul, V. and Sakayaroj, J. 2014. Diversity and antimicrobial activity of endophytic fungi isolated from the seagrass Enhalus acoroides. Indian J Geomarine Sci. 43 (5): 785-797.].

According to the literature [Priscila Chaverri, Lisa A Castlebury, Gary J Samuels, David M Geiser. 2003. Multilocus phylogenetic structure within the Trichoderma harzianum/Hypocrea lixii complex. Molecular Phylogenetics and Evolution. 27(2): 302-313.], *Hypocrea lixii* in FIG. 3 was reported as a sexual state of *Trichoderma harzianum.* In the present disclosure, the species name of *Trichoderma harzianum* was used.

The strains were pre-cultured in a dark room at 25°C, resuspended in sterilized tap water, and shaken at 50 rpm for 2 hours to prepare a fungal suspension.

### [Example 3]

### Fungal synthesis of Trichoderma-mediated iron oxide nanoparticles

A process of fungal synthesis of *Trichoderma-mediated* iron oxide (Fe₂O₃) nanoparticles was shown in FIG. 5, and a specific synthesis method was as follows. *Trichoderma harzianum* was cultured in a sabouraud dextrose broth (SDB). Spores of fungi cultured on fresh media were collected using a sterile syringe and added to the sterilized media, and cultured in a shaking incubator at 150 rpm and 28°C for 7 days. The cultured strains were filtered through a sterilized sieve and washed three times with distilled water to remove medium particles. The washed fungi released metabolites in water when affected by stress conditions. To this end, 25 g of biomass was collected, suspended in 150 ml of distilled water, and cultured in a shaking incubator at 150 rpm and 40°C for 10 days. After culturing for 10 days, the biomass was sonicated for 30 minutes at room temperature to break the cell walls and release metabolites. The sonicated biomass was filtered using Whatman filter paper No. 1 and then the pH was measured. After sonication, a cell-free filtrate and 5 mM of an iron oxide solution were mixed in a volume ratio of 1 to 10: 1 and stirred at 40°C and 150 rpm for 24 hours. Through this process, metal nanoparticles were generated through a reduction process. A positive control (distilled cell-free filtrate) and a negative control (50 mM iron oxide solution without cell-free filtrate) were maintained under the same conditions. The mixture of iron oxide and the filtrate was synthesized as a white precipitate after 24 to 48 hours, and thus identified with the naked eyes. The homogenized sample was then centrifuged at 10,000 rpm for 15 minutes. The pellets were collected and washed three times with distilled water. The pellets were transferred to a petri dish and stored in a desiccator at 40°C overnight. After 24 hours, the dried nanoparticles were pulverized using sterilized forceps. The pulverized nanoparticle powder was heated in an electric furnace at 500°C for 2 hours to obtain *Trichoderma harzianum-*mediated iron oxide nanoparticles.

### [Example 4]

### Characteristic analysis of Trichoderma-mediated iron oxide nanoparticles

FTIR, XRD, FeSEM, and EDS (elemental mapping) were performed to analyze the characteristics of *Trichoderma-mediated* iron oxide nanoparticles.

### 4-1. FTIR spectroscopy

FTIR spectroscopy was used to identify the functional groups responsible for the synthesis of iron oxide nanoparticles. As confirmed in FIG. 5, spectral peaks at 1622.13 and 3163.70 cm⁻¹ indicated O-H stretching and C=C stretching to support the successful production of *Trichoderma-mediated* iron oxide nanoparticles.

### 4-2. XRD analysis

As confirmed in FIG. 6, an XRD spectrum showed a broadened diffraction peak, indicating that the purity of iron oxide (Fe₂O₃) nanoparticles was high, and the crystallite size of the particles was calculated using the Scherrer's equation [d = Kλ/βcosθ], The average crystallite size was 10 nm.

### 4-3. Fe-SEM and EDS characterization

To determine the crystallinity of particles, Fe-SEM analysis was performed on iron oxide nanoparticle samples. The average crystallite size was 10 nm. FIG. 7 shows images of iron oxide nanoparticles measured through Fe-SEM as a microscopic scale photograph. In the SEM images, it was confirmed that the particles were uniformly distributed without almost agglomeration.

### 4-4. Element mapping

The elemental composition and EDS spectrum of iron oxide (Fe₂O₃) NPs were integrated and shown in FIG. 8. The EDS spectrum result showed peaks of iron (Fe) and oxygen (O) to confirm the purity of the synthesized iron oxide (Fe₂O₃) NPs. To confirm the EDS spectroscopy results, EDS mapping was performed, and as shown in FIG. 8, the sample contained iron and oxygen as the main components with strong signals. In summary, these results demonstrated that the iron oxide (Fe₂O₃) NPs used in the present disclosure had high purity.

### [Example 5]

### Confirmation of effects of Trichoderma-mediated iron oxide nanoparticles on Abies koreana

### 5-1. Application of Trichoderma-mediated iron oxide nanoparticles to Abies koreana

As shown in Table 1, the pots were randomly treated into six groups.

**[Table 1]**

| Group | Treatment |
|---|---|
| FMN | Inoculation of *Trichoderma-mediated* nanoparticles |
| MD | Moderate dry |
| MD+FMN | Inoculation of *Trichoderma-mediated* nanoparticles and moderate dry |
| SD | Severe dry |
| SD+FMN | Inoculation of *Trichoderma-mediated* nanoparticles and severe dry |
| CK | Non-inoculated control |

To prepare an inoculum, 2 g of *Trichoderma-mediated* iron oxide nanoparticles were dissolved in 5 L of tap water. For FMN, SD+FMN, and MD+FMN treatments, 500 ml of inoculum was applied to each pot at regular intervals of 7 days as shown in FIG. 9. The plants were harvested after 3 months, and the growth of aerial parts, leaf structures, and physiological parameters of 16 plants used in each group were measured.

### 5-2. Plant growth analysis

The plants were harvested after 3 months, and the stem length and root length of each plant were measured. The phenotypic growth of the plants described the effect of the *Trichoderma*-mediated nanoparticles regardless of the stress application. The results in FIG. 10 show that the FMN group significantly affected plant growth promotion and improved resistance to dry of the plant compared to the control group (CK). In addition, it was confirmed that the FMN had a great effect on *Abies koreana* under suitable moderate drought conditions compared to severe dry conditions.

After harvesting the plants, the morphological characteristics of each group were investigated, and the results were shown in FIG. 11. The shoot and root lengths showed differences between the groups. The FMN group had a positive effect on shoot and root lengths compared to the control group (CK) and all other treatment groups. In particular, the FMN group showed a significant increase in shoot length compared to the control group (CK). The MD+FMN group showed an increase in shoot length compared to the MD group and the CK group. The root length of the FMN group increased compared to the CK group, and the MD+FMN group and the SD+FMN group also showed an increase in root length compared to the MD group and the SD group, respectively. These results show that the FMN group, the SD+FMN group, and the MD+FMN group showed significant differences in shoot and root lengths compared to the control group (CK), the MD group, and the SD group.

### 5-3. Measurement of photosynthetic gas exchange

Photosynthetic gas exchange measurement was performed using a portable infrared gas analyzer (IRGA, LCpro ADC BioScientific, Herfordshire, UK) under the following controlled environment: 50 + 5% relative humidity, 370 ppm CO₂, 25 + 2°C, and 1500 lmol m⁻² s⁻¹ irradiance). Photosynthetic rate (Amax), stomatal conductance (Gs), and transpiration rate (E) were measured every minute until stabilization (approximately 10 minutes) in leaves pre-adapted to high irradiance to promote maximum photosynthetic activity. All parameters were corrected for the analyzed leaf area, and water use efficiency (WUE) was calculated as a ratio (A/E ratio) of photosynthetic rate to transpiration rate.

As shown in FIG. 11, the groups inoculated with FMN showed significantly increased photosynthetic rates compared to other groups. The FMN group increased the Amax of the plants compared to other groups, and there was no significant difference from the control group. Under moderate drought conditions, the group treated with FMN relieved moderate stress and improved the photosynthetic efficiency of the plants compared to the MD group. The SD+FMN group also relieved stress, but not significantly, and Amax, Gs, and E had positive correlations, and WUE had a negative correlation. Ci was controlled in all treatments according to the net photosynthetic rate. For the SD group and the MD group, water use efficiency (WUE) significantly increased due to drought stress.

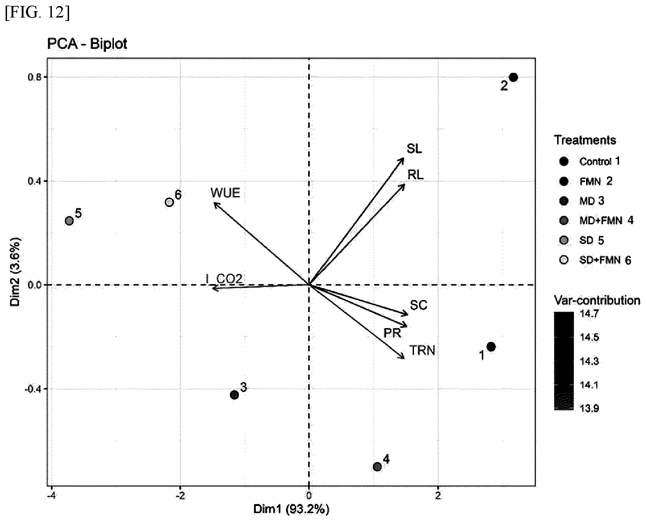

In addition, principal component analysis (PCA) was performed to visualize multivariate data. As shown in FIG. 12, the score plot of PCA showed a clear distinction between all groups, and PC1 and PC2 accounted for 93.2% and 3.6% in the PCA analysis, respectively. In addition, TRN, PR, and SC have positive correlations in the PCA score plot, but have negative correlations with WUE. SL and RL also have positive correlations. The loading plot of PCA showed the relative levels of the characteristics of each group.

### Statistical analysis

ANOVA was performed at P < 0.05 and 0.01, and then the post-hoc test-Tuckey's HSD was performed. To study the degree of correlation between features and reduce the dimensionality of the data, multivariate analyses such as Pearson correlation analysis and principal component analysis were performed, and all these analyses were performed using RStudio (var. 4.2.3) of FactomineR/ggplot2 and corrplot.

### [Accession number]

Depositary Authority Name: Korean Collection for Type Cultures (KCTC)
Accession number: KCTC 16216BP
Accession Date: 20241227

The national research and development project that supported this invention is as follows.
[Project Identification Number] 1405005954
[Project Number] 2023519B10-2323-AB02 (1405006171) (0525-20230016)
[Name of Project Executing Organization] Braintree Biotechnology Institute, Seoul National University R&DB Foundation
[Research Period] January 1, 2023 to December 31, 2023

## Claims

1. A composition for improving plant drought stress resistance, comprising *Trichoderma* spp.-mediated iron oxide nanoparticles.

2. The composition of claim 1, wherein the *Trichoderma* is *Trichoderma harzianum* (Accession No. KCTC 16216BP).

3. The composition of claim 1, wherein the *Trichoderma-mediated* iron oxide nanoparticles are produced by performing the following steps (a) to (f):
(a) obtaining biomass after washing *Trichoderma;*
(b) suspending and culturing the biomass in distilled water;
(c) obtaining a cell-free filtrate by filtering after ultrasonic treatment;
(d) obtaining a precipitate by mixing the cell-free filtrate and an iron oxide solution;
(e) obtaining nanoparticles by washing and drying the precipitate; and
(f) pulverizing and heating the nanoparticles.

4. The composition of claim 3, wherein the cell-free filtrate and the iron oxide solution in step (d) are mixed in a volume ratio of 1 to 20:1.

5. The composition of claim 1, wherein the plant is conifers or dicotyledonous plants.

6. The composition of claim 5, wherein the conifers are *Abies koreana,* yews, pines, metasequoia, firs, Cedrus deodara, Thuja orientalis or Abies nephrolepis, and the dicotyledonous plants are arabesque, cucumber, tomato, soybean, mung bean, red bean, radish, cabbage, lettuce, quince, plantain, carrot, clover, peach tree, apple tree, persimmon tree, potato, or sweet potato.

7. A microbial agent for improving plant drought stress resistance, comprising the composition of any one of claims 1 to 6.

8. A method for improving plant drought stress resistance, comprising treating a plant or soil with the composition of any one of claims 1 to 6.

9. The method for improving plant drought stress resistance of claim 8, wherein the treating step is performed by at least one method selected from the group consisting of soil drenching, soil irrigation, foliar spraying, trunk injection, foliage treatment, rhizosphere treatment, and seed treatment.

10. A method for producing *Trichoderma*-mediated iron oxide nanoparticles, comprising the following steps (a) to (f):
(a) obtaining biomass after washing *Trichoderma;*
(b) suspending and culturing the biomass in distilled water;
(c) obtaining a cell-free filtrate by filtering after ultrasonic treatment;
(d) obtaining a precipitate by mixing the cell-free filtrate and an iron oxide solution;
(e) obtaining nanoparticles by collecting and drying pellets after centrifugation; and
(f) pulverizing and heating the nanoparticles.

11. The method for producing *Trichoderma-mediated* iron oxide nanoparticles of claim 10, wherein the culturing in step (b) is performed by shake-culturing at 30 to 50°C for 5 to 15 days.

12. The method for producing *Trichoderma*-mediated iron oxide nanoparticles of claim 10, wherein the cell-free filtrate and the iron oxide solution of step (d) are mixed in a volume ratio of 1 to 20:1.

13. The method for producing *Trichoderma*-mediated iron oxide nanoparticles of claim 10, wherein the heating in step (f) is performed at 400 to 600°C for 1 to 3 hours.
